# EUROPEAN PATENT APPLICATION

(11) **EP 4 274 284 A1**
(43) Date of publication of application: **08.11.2023**
(21) Application number: 21913674.4
(22) Date of filing: 29.11.2021
(51) Int. Cl.: H04W 12/08, H04W 12/06, H04W 12/0471

(54) **NETWORK ACCESS METHOD AND SYSTEM FOR WIRELESS ACCESS POINT, AND AP AND STORAGE MEDIUM**

(30) Priority: 30.12.2020 CN 202011643647
(71) Applicant: ZTE Corporation, Shenzhen, Guangdong 518057 (CN)
(72) Inventor: ZHAO, Endong, Shenzhen, Guangdong 518057 (CN); XIAO, Bo, Shenzhen, Guangdong 518057 (CN); YANG, Zhaolei, Shenzhen, Guangdong 518057 (CN)
(74) Representative: Gevers Patents
(86) International application number: PCT/CN2021/133844
(87) International publication number: WO 2022/142933

(57) **Abstract**

Provided are a network access method and system for a wireless access point, and an AP and a storage medium, which belong to the technical field of communications. The method includes: sending different first random numbers to candidate APs, respectively, the candidate APs being APs accessed a network; then, receiving a second random number and a first public key sent from a target AP from a plurality of candidate APs; next, generating a second public key according to the second random number, and a first random number corresponding to the target AP; and in a case where the first public key is determined to be the same as the second public key, joining, to a network to which the candidate APs belong, an AP to be accessed to a network.

## Description

### Cross-reference to Related Applications

The present disclosure claims the priority of Chinese patent application CN 202011643647.8, entitled "Network Access Method and System for Wireless Access Point, and AP and Storage Medium" and filed on December 30, 2020, the entirety of which is incorporated herein by reference.

### Technology Field

The present disclosure relates to the technical field of communications, and in particular to, a network access method for a wireless access point, a network access system for a wireless access point, an AP, and a storage medium.

### Background

As wireless communication technology is widely used, users have increasing experience requirement on wireless communication network. A mesh network is a multi-hop network, including a plurality of wireless access points (APs). The plurality of APs form a mesh network by wireless link connection.

At present, An AP accesses to a mesh network mainly by two manners, i.e., by a Wi-Fi protected setup (WPS) button and by using a user device to scan a QR code. For the manner in which the AP accesses to the mesh network by the WPS button, operations are complicated, an AP to be joined to a network accesses to the mesh network according to a self-defined beacon frame, and parses the self-defined beacon frame to synchronize configuration information of the mesh network, so as to automatically join to the mesh network. Any device acquiring a format of the self-defined beacon frame may join to the network by the manner of the WPS button, resulting in potential safety risks. When an AP to be accessed to a network is guided to access to the mesh network by using the user device to scan the QR code, a QR code of the AP to be accessed to a network requires to be scanned, and the user device is associated with the AP to be accessed to a network via a wireless network and configures the AP to be accessed to a network. However, during accessing to the mesh network by using the user device to scan the QR code, the user may disconnect the Internet, so that the network cannot be accessed. If there is a mesh network with the same name in the environment, the AP to be accessed to a network might connect to an insecure network. Therefore, how to ensure the network access safety of the AP to be accessed to a network is an urgent problem to be solved.

### Summary

Embodiments of the present disclosure provide a network access method for a wireless access point, a network access system for a wireless access point, an AP, and a storage medium, so as to ensure the network access security of the AP to be accessed to a network.

In a first aspect, the present disclosure provides a network access method for a wireless access point AP. The network access method includes: sending different first random numbers to a plurality of candidate APs, respectively, wherein the candidate APs are APs accessed to a network; receiving a second random number and a first public key sent from a target AP from the plurality of candidate APs; generating a second public key according to the second random number received and a first random number corresponding to the target AP; and joining an AP to be accessed to a network to a network to which the candidate APs belong in a case where the first public key is determined to be the same as the second public key.

In a second aspect, the present disclosure provides a network access method for an AP. The network access method includes: acquiring a plurality of first random numbers sent from an AP to be accessed to a network in a case where network access confirmation information sent from a mobile terminal is received, and determining a first random number corresponding to a target AP; generating a second random number, and generating a first public key according to the first random number corresponding to the target AP and the second random number; and sending the second random number and the first public key to the AP to be accessed to the network, such that the AP to be accessed to the network generates a second public key according to the second random number and the first random number corresponding to the target AP, and joining the AP to be accessed to the network to a network to which candidate APs belong in a case where the first public key is the same as the second public key.

In a third aspect, an embodiment of the present disclosure provides a network access system. The network access system includes: an AP to be accessed to a network, a plurality of APs accessed to a network, and a mobile terminal, the plurality of APs accessed to the network comprising a target AP communicatively connected to the mobile terminal, wherein the AP to be accessed to the network is configured to: determine a plurality of candidate APs from the plurality of APs accessed to the network, and signal strength of each of the plurality of candidate APs is greater than signal strength of each of remaining APs accessed to the network; the AP to be accessed to the network is further configured to: send a first random number to each of the candidate APs; the target AP is configured to: generate a second random number in response to that network access confirmation information sent from the mobile terminal is acquired in a case where the first random number sent from the AP to be accessed to the network is received; the target AP is further configured to: generate a first public key based on the first random number corresponding to the target AP and the second random number, and send the first public key and the second random number to the AP to be accessed to the network; the AP to be accessed to the network is further configured to: generate a second public key based on the second random number and the first random number corresponding to the target AP; and the AP to be accessed to the network is further configured to: join to a network to which the candidate APs belong in a case where the first public key is determined to be the same as the second public key.

In a fourth aspect, an embodiment of the present disclosure provides an AP. The AP includes a processor, a memory, a computer program stored in the memory and executable by the processor, and a data bus for realizing connection and communication between the processor and the memory. The computer program, when executed by the processor, implements any step of the network access method provided in the description of the present disclosure.

In a fifth aspect, an embodiment of the present disclosure provides storage medium for computer readable storage. The storage medium stores one or more programs, and the one or more programs is/are executable by one or more processors, so as to implement any step of the network access method provided in the description of the present disclosure.

### Brief Description of the Drawings

Fig. 1 is a schematic flowchart of a network access method for an AP according to an embodiment of the present disclosure;
Fig. 2 is a schematic flowchart of sub-steps of a network access method for an AP in Fig. 1;
Fig. 3 is a schematic diagram of a scenario of a data transmission of a network access method for an AP according to an embodiment of the present disclosure;
Fig. 4 is a schematic flowchart of another network access method for an AP according to an embodiment of the present disclosure;
Fig. 5 is a schematic diagram of a structure of a network access system according to an embodiment of the present disclosure; and
Fig. 6 is a schematic block diagram of a structure of an AP according to an embodiment of the present disclosure.

### Detailed Description of the Embodiments

Technical solutions in embodiments of the present disclosure will be clearly and completely described below in conjunction with the accompanying drawings in the embodiments of the present disclosure. Obviously, the described embodiments are some embodiments of the present disclosure, rather than all the embodiments. Based on the embodiments in the present disclosure, all other embodiments obtained by a person of ordinary skills in the art without creative effort shall fall within the protection scope of the present disclosure.

Flowcharts shown in the drawings are only exemplary, and do not must include all contents and operations/steps and are not executed according to the described order. For example, some operations/steps may be divided, combined or partially combined, and thus an actual execution order might change according to actual circumstances.

It should be understood that, terms used in the description of the present disclosure are only for the purpose of describing specific embodiments, rather than limiting the present disclosure. As used in the description of the present disclosure and in the appended claims, the singular form of a word preceded by "a", "an", and "the" intends to include the plural, unless the context clearly indicates otherwise.

Embodiments of the present disclosure provide a network access method for a wireless access point, a network access system for a wireless access point, an AP, and a storage medium. The network access method for a wireless access point may be applied to a wireless access point AP, and the AP may be a device, such as a wireless exchanger or a wireless router.

Some embodiments of the present disclosure are described in detail below with reference to the accompanying drawings. Without conflicts, the following embodiments and features in the embodiments may be combined with each other.

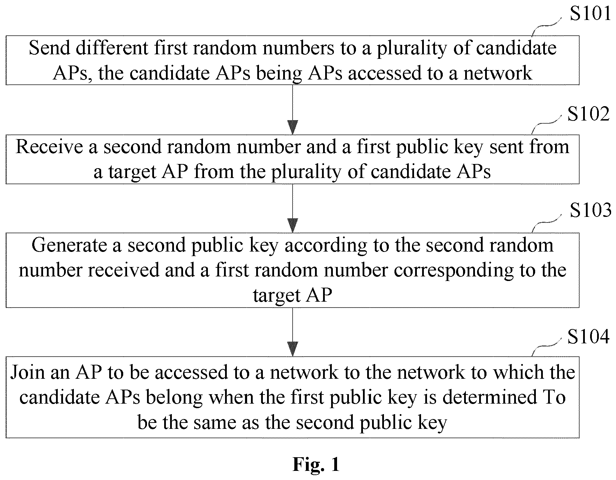

Referring to Fig. 1, Fig. 1 is a schematic flowchart of a network access method for an AP provided in an embodiment of the present disclosure.

As shown in Fig. 1, the network access method for an AP is applied to an AP to be accessed to a network, and includes steps S101 to S104.

At step S101, different first random numbers are sent to a plurality of candidate APs, respectively, and the candidate APs are APs accessed to a network.

The network, to which the candidate Aps belong, may be determined according to actual circumstances. For example, the network may be a mesh network (e.g., wireless mesh network). The mesh network includes a plurality of APs (wireless access points) accessed to the network and a controller. The plurality of APs accessed to the network are connected to the controller to form one or more wired links or wireless links, a connection manner for which may be selected according to circumstances. For example, the plurality of APs accessed to the network are connected to the controller via IEEE 802.3 Ethernet to form one or more wired links For another example, the plurality of APs accessed to the network are connected to the controller to form one or more wireless links via IEEE 802.11 Wi-Fi. It should be noted that, alternatively, the mesh network may not include an AP accessed to the network and include only one controller, and the controller is considered as an AP accessed to the network. Thus, in the present disclosure, the controller and the AP accessed to the network are not distinguished from each other, and are both described as an AP accessed to the network.

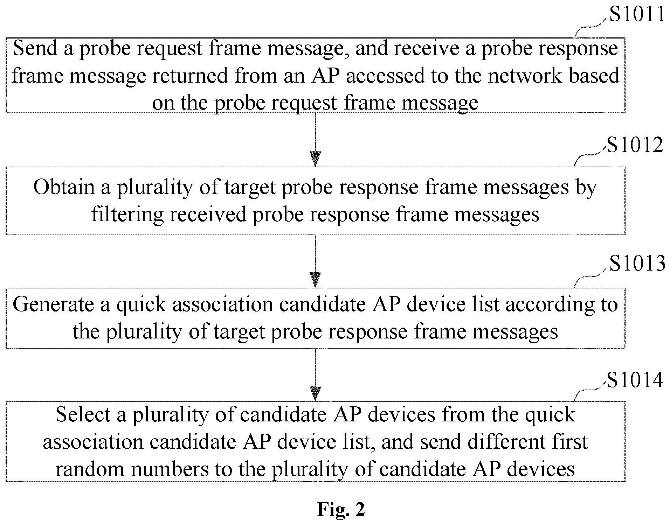

In an embodiment, as shown in Fig. 2, the step S101 includes sub-steps S1011 to S1014.

At sub-step S1011, a probe request frame message is sent, and a probe response frame message returned from the AP accessed to the network based on the probe request frame message is received.

In an embodiment, after the AP to be accessed to the network is powered on and initialized, a self-defined 802.11 beacon (beacon frame) and the probe request frame message with a self-defined information element (IE) field are broadcast, so that the AP accessed to the network learns that the AP to be accessed to the network supports a function of quickly connection to the mesh network. When the AP accessed to the network has received the probe request frame message, the AP accessed to the network generates the probe response frame message with the self-defined information element field based on the probe request frame message and sends the probe response frame message to the AP to be accessed to the network, and the AP to be accessed to the network receives the probe response frame message.

At sub-step S1012, a plurality of target probe response frame messages are obtained by filtering the probe response frame messages received.

In an embodiment, the probe response frame messages including the information element field of the AP to be accessed to the network are screen out from the probe response frame messages, so as to obtain the plurality of target probe response frame messages. Exemplarily, the probe response frame messages received include: a probe response frame message 1, a probe response frame message 2, a probe response frame message 3, a probe response frame message 4, a probe response frame message 5, a probe response frame message 6, a probe response frame message 7, a probe response frame message 8, a probe response frame message 9, and a probe response frame message 10. Each of the probe response frame message 1, the probe response frame message 4, the probe response frame message 5, the probe response frame message 7, the probe response frame message 9, and the probe response frame message 10 include the information element field of the AP to be accessed to the network; and thus the probe response frame message 1, the probe response frame message 4, the probe response frame message 5, the probe response frame message 7, the probe response frame message 9, and the probe response frame message 10 are the target probe response frame messages.

At sub-step S1013, a quick association candidate AP list is generated according to the plurality of target probe response frame messages.

The quick association candidate AP list is a list formed by arranging identification information of the candidate APs. The identification of the candidate APs may be determined according to actual circumstances, which is not limited herein. For example, the identification of the candidate APs may be a name of the candidate APs.

In an embodiment, the APs corresponding to the target probe response frame messages are determined, respectively; and the quick association candidate AP list is generated by arranging the APs according to signal strength of the APs. By arranging the APs according to the signal strength of the APs, the quick association candidate AP list may be obtained quickly.

Exemplarily, an AP1 has signal strength of 2, an AP2 has signal strength of 5, an AP3 has signal strength of 1, an AP4 has signal strength of 6, an AP5 has signal strength of 4, and a greater numerical value of the signal strength indicates a stronger signal. Thus, the APs are arranged, according to the signal strength from strong to weak, in an order of AP4, AP2, AP5, AP1, and AP3, so that the quick association candidate AP list shown in Table 1 is obtained.

**Table 1**

| Quick association candidate AP list |
|---|
| AP4 |
| AP2 |
| AP5 |
| AP 1 |
| AP3 |

At sub-step S1014, a plurality of candidate APs are selected from the quick association candidate AP list, and different first random numbers are sent to the plurality of candidate Aps, respectively.

The candidate APs are APs accessed to the network, and the signal strength of each of the plurality of candidate APs is greater than the signal strength of each of the remaining APs accessed to the network.

In an embodiment, according to the order of the APs, the candidate APs are selected sequentially from the quick association candidate AP list, until a preset quantity of candidate APs are obtained. For example, 3 candidate APs need to be selected from the quick association candidate AP list as shown in Table 1, and thus the AP4, the AP2, and the AP5 are selected sequentially from the quick association candidate AP list. It should be noted that, the preset quantity may be determined according to actual circumstances, which is not limited herein. For example, the preset quantity may be 3 or 5.

In an embodiment, after the plurality of candidate APs are obtained, a preset random number generation rule is acquired. A random number corresponding to each of the candidates AP is generated according to the preset random number generation rule, and different random numbers are sent sequentially to the candidate Aps, respectively. The preset random number generation rule may be selected according to actual circumstances, which is limited herein. The preset random number generation rule may be statistical simulation method, inverse transformation method, rejection method, and the like. For example, the candidate APs include the AP4, the AP2, and the AP5. Based on the preset random number generation rule, a first random number corresponding to the AP4 is determined to be 10, a first random number corresponding to the AP2 is determined to be 50, and a first random number corresponding to the AP5 is determined to be 30.

In an embodiment, quick association probe messages are sent sequentially to the candidate Aps, respectively. A quick association probe message includes a product serial number and a MAC address (media access control address) of the AP to be accessed to the network. Whether there are candidate APs at the same signal channel is determined. If there are candidate APs at the same signal channel, the quick association probe message may be sent to the candidate APs at the same signal channel simultaneously. By sending the quick association probe message to the candidate APs at the same signal channel simultaneously, the efficiency of information transmission can be enhanced.

Exemplarily, the candidate AP1 is located at a signal channel 10, the candidate AP2 is located at a signal channel 5, the candidate AP3 is located at the signal channel 5, the candidate AP4 is located at the signal channel 10, and the candidate AP5 is located at a signal channel 15. The quick association probe message is sent to the candidate AP1 and the candidate AP4 simultaneously, is sent to the candidate AP2 and the candidate AP3 simultaneously, and is finally sent to the candidate AP5.

At step S102, a second random number and a first public key sent from the target AP from the plurality of candidate APs are received.

The target AP is an AP screened out from the plurality of candidate APs. A manner for screening out the target AP may be determined according to actual circumstances, which is not limited herein. For example, the manner for screening out the target AP may refer to selecting an AP, having strongest signal strength from the plurality of candidate APs, as the target AP.

In an embodiment, first network access information of the AP to be accessed to the network is acquired in response to scanning a QR code of the AP to be accessed to the network; second network access information of the AP to be accessed to the network is acquired, and whether the AP to be accessed to the network is a reliable AP is determined according to the first network access information and the second network access information. If the AP to be accessed to the network is determined to be a reliable AP, network access confirmation information is sent to the target AP. The first network access information includes a product serial number, a MAC address (media access control address), and an IE (information element) field identification of the AP to be accessed to the network. The second network access information includes the product serial number, the MAC address (media access control address), and the IE (information element) field identification of the AP to be accessed to the network. A mobile terminal may select network access information according to actual circumstances, which is limited herein. For example, the mobile terminal may be a device such as a mobile phone and a tablet computer. By using the mobile terminal to scan the AP to be accessed to the network to acquire the first network access information and acquiring the second network access information of the AP to be accessed to the network, whether the AP to be accessed to the network is a reliable device is determined according to the first network access information and the second network access information.

It should be noted that, the second network access information of the AP to be accessed to network may be acquired by receiving the second network access information sent from the target AP; and alternatively, the second network access information of the AP to be accessed to the network may be acquired by querying the second network access information in a memory. Therefore, the manner for acquiring the second network access information is not limited herein.

In an embodiment, when whether the AP to be accessed to the network is a reliable AP is determined according to the first network access information and the second network access information, sending the network access confirmation information to the target AP includes: determining whether the first network access information is the same as the second network access information, i.e., whether the product serial number, the MAC address, and the IE field identification of the AP to be accessed to the network in the first network access information are the same as the those in the second network access information; if the product serial number, the MAC address, and the IE field identification of the AP to be accessed to the network in the first network access information are the same as those in the second network access information, determining that the AP to be accessed to the network is a reliable AP; if the product serial number, the MAC address, and the IE field identification of the AP to be accessed to the network in the first network access information are different from those in the second network access information, determining that the AP to be accessed to the network is an unreliable AP. When the AP to be accessed to the network is determined to be a reliable AP, the network access confirmation information and a preset public key generation rule are sent to the target AP. The preset public key generation rule may be determined according to actual circumstances, which is limited herein. For example, the preset public key generation rule may be a multiplication computation.

In an embodiment, when the network access confirmation information and the preset public key generation rule sent from the mobile terminal are received, the preset random number generation rule is acquired. A second random number is generated base on the preset random number generation rule. The first random number corresponding to the target AP and the second random number are computed based on the preset public key generation rule to obtain the first public key. The preset random number generation rule may be selected according to actual circumstances, which is limited therein. The preset random number generation rule may be statistical simulation method, inverse transformation method, rejection method, and the like. For example, the second random number generated by the statistical simulation method is 30.

Exemplarily, the second random number generated by the inverse transformation method is 20. The preset public key generation rule is the multiplication computation. The first random number corresponding to the target AP is 30. Based on the multiplication computation and according to the first random number 30 and the second random number 20, the first public key of 600 is obtained.

In an embodiment, after the target AP acquires the second random number and the first public key, the target AP sends the second random number, the first public key, and the signal channel where the target AP is located to the AP to be accessed to the network, so that the AP to be accessed to the network receives the second random number, the first public key, and the signal channel where the target AP is located.

At step S103, a second public key is generated according to the second random number received and the first random number corresponding to the target AP.

After the second random number, the first public key, and the signal channel where the target AP is located, are received, the preset public key generation rule is acquired. Based on the preset public key generation rule and according to the first random number and the second random number, the second public key is generated. Therefore, the preset public key generation rule is stored in the AP to be accessed to the network in advance, and the preset public key generation rule is the same as a preset public key generation rule in the target AP. The preset public key generation rule may be determined according to actual circumstances, which is limited herein. For example, the preset public key generation rule may be a multiplication computation.

Exemplarily, the preset public key generation rule is the multiplication computation. The first random number corresponding to the target AP is 30, and the second random number is 20. Based on the multiplication computation and according to the first random number 30 and the second random number 20, the first public key of 600 is obtained.

At step S104, when the first public key is determined to be the same as the second public key, the AP to be accessed to the network is joined to the network to which the candidate AP belong.

The mesh network includes a plurality of APs accessed to the network and a controller. The plurality of APs accessed to the network are connected to the controller to form a mesh network.

In an embodiment, whether the first public key is the same as the second public key is determined. If the first public key is the same as the second public key, the mesh network is determined to be a reliable network, and the AP to be accessed to the network is joined to the mesh network. If the first public key is different from the second public key, it is determined that leakage of the second random number and the first public key occurs during transmission or an unreliable AP has tempered with information, such that the mesh network is further determined to be an unreliable network, and the AP to be accessed to the network is not joined to the mesh network. By determining whether the first public key is the same as the second public key, whether the mesh network is a reliable network can be determined accurately.

Exemplarily, if the first public key is 20 and the second public key is 20, i.e., the first public key 20 is determined to be the same as the second public key 20, the mesh network is determined to be a reliable network.

In an embodiment, joining the AP to be accessed to the network to the mesh network may include: after confirming that the AP to be accessed to the network is a reliable AP and that the mesh network is a reliable network, the AP to be accessed to the network is joined to the mesh network by a preset EAP key negotiation between the target AP and the AP to be accessed to the network. The preset EAP key negotiation may be determined according to actual circumstances, which is not limited herein. For example, the preset EAP key negotiation may be performed based on an asymmetric cryptographic algorithm, a specific key exchange algorithm, a "secret" shared in advance by both parties of communications, and the like.

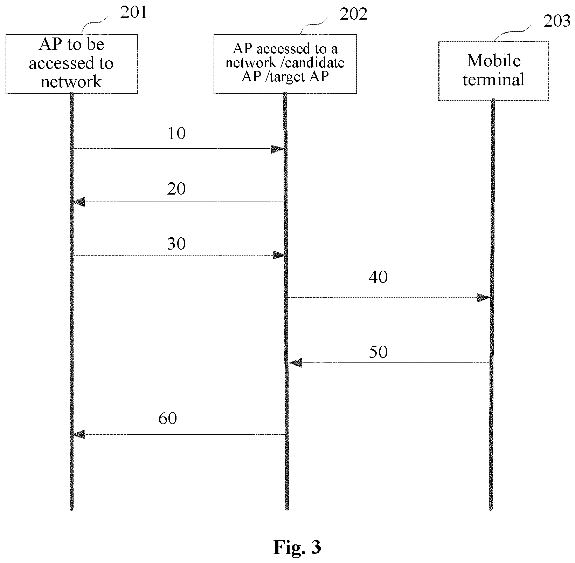

As shown in Fig. 3, an AP 201 to be accessed to a network broadcasts a probe request frame message via a transmission line 10. An AP202 accessed to a network returns a probe response frame message to the AP 201 to be accessed to the network via a transmission line 20. The AP 201 to be accessed to the network sends different first random numbers to the candidate APs from the plurality of APs via a transmission line 30, respectively. A mobile terminal 203 acquires the second network access information of the AP to be accessed to the network via a transmission lime 40, and when the AP 201 to be accessed to the network is determined to be a reliable AP, the mobile terminal 203 sends the network access confirmation information to a target AP via a transmission line 50. The target AP 202 generates the second random number, generates the first public key according to the first random number corresponding to the AP202 and the second random number, and sends the first public key and the second random number to the AP 201 to be accessed to the network via a transmission line 60. The AP 201 to be accessed to the network generates the second public key according to the second random number and the first random number corresponding to the target AP202. When the first public key is determined to be the same as the second public key, the AP 201 to be accessed to the network is joined to the mesh network.

According to the network access method for an AP provided in the above embodiment, different first random numbers are sent to the candidate APs, respectively, and the candidate APs are APs accessed to a network; then, a second random number and a first public key sent from a target AP from a plurality of candidate APs are received; next, a second public key is generated according to the second random number and the first random number corresponding to the target AP; and when the first public key is determined to be the same as the second public key, an AP to be accessed to the network is joined to the network to which the candidate AP belongs. The network access security of the AP to be accessed to the network can be ensured by verifying the first public key and the second public key.

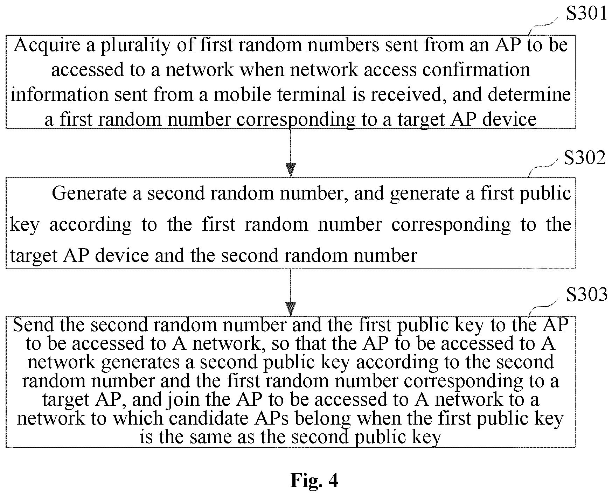

Referring to Fig. 4, Fig. 4 is a schematic flowchart of another network access method for an AP provided in an embodiment of the present disclosure.

As shown in Fig. 4, the network access method for an AP is applied to an AP accessed to a network, and the method includes steps S301 to S303.

At step S301, when the network access confirmation information sent from a mobile terminal is received, a plurality of first random numbers sent from an AP to be accessed to the network are acquired, and a first random number corresponding to a target AP is determined.

The target AP is an AP screened out from a plurality of candidate APs. A manner for screening out the target AP may be determined according to actual circumstances, which is not limited herein. For example, the manner for screening out the target AP may include selecting an AP having strongest signal strength from the plurality of candidate APs, as the target AP.

In an embodiment, when the network access confirmation information sent from the mobile terminal and a preset public key generation rule have been received, the target AP is screened out from the plurality of candidate APs. After the target AP is obtained, the first random number corresponding to the target AP is acquired.

At step S302, a second random number is generated, and a first public key is generated according to the first random number corresponding to the target AP and the second random number.

A preset random number generation rule is acquired, and the second random number is generated based on the preset random number generation rule. Based on the preset public key generation rule, the first random number corresponding to the target AP and the second random number are computed to obtain the first public key. The preset random number generation rule may be selected according to actual circumstances, which is not limited herein. The preset random number generation rule may be statistical simulation method, inverse transformation method, rejection method, or the like.

At step S303, the second random number and the first public key are sent to the AP to be accessed to the network, so that the AP to be accessed to the network generates a second public key according to the second random number and the first random number corresponding to the target AP; and if the first public key is the same as the second public key, the AP to be accessed to the network is joined to the network to which candidate APs belong.

The network to which the candidate APs belong may be determined according to actual circumstances. For example, the network to which the candidate APs belong may be a mesh network (wireless mesh network).

After the target AP obtains the second random number and the first public key, the target AP sends the second random number, the first public key, and a signal channel where the target AP is located to the AP to be accessed to the network, so that the AP to be accessed to the network acquires the preset public key generation rule after receiving the second random number, the first public key, and the signal channel where the target AP is located. The second public key is generated based on the preset public key generation rule and according to the first random number and the second random number, and whether the first public key is the same as the second public key is determined. If the first public key is the same as the second public key, the mesh network is determined to be a reliable network, and the AP to be accessed to the network is joined to the mesh network; and if the first public key is different from the second public key, the mesh network is determined to be an unreliable network, and the AP to be accessed to the network is not joined to the mesh network.

According to the network access method for an AP provided in the above embodiment, when network access confirmation information sent from a mobile terminal is received, a plurality of first random numbers sent from an AP to be accessed to a network are acquired, and a first random number corresponding to a target AP is determined; then, a second random number is generated, and a first public key is generated according to the first random number corresponding to the target AP and the second random number; and next, the second random number and the first public key are sent to the AP to be accessed to the network, so that the AP to be accessed to the network generates a second public key according to the second random number and the first random number corresponding to the target AP; and if the first public key is the same as the second public key, the AP to be accessed to the network is joined to a network to which candidate APs belong. The network access security of the AP to be accessed to the network can be ensures by verifying the first public key and the second public key.

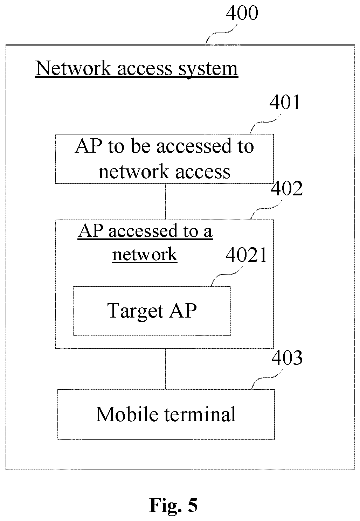

Referring to Fig. 5, Fig. 5 is a schematic diagram of a structure of a network access system 400 provided in an embodiment of the present disclosure.

As shown in Fig. 5, the network access system 400 includes an AP 401 to be accessed to a network, a plurality of APs 402 accessed to a network, and a mobile terminal 403. The plurality of APs 402 accessed to the network include a target AP4021, and the target AP4021 is communicatively connected to the mobile terminal 403. The AP 401 to be accessed to the network is configured to determine a plurality of candidate APs from the plurality of APs accessed to the network, and signal strength of each of the plurality of candidate APs is greater than signal strength of each of the remaining APs accessed to the network. The AP 401 to be accessed to the network is further configured to send a first random number to each of the candidate APs. The target AP4021 is configured to generate a second random number if network access confirmation information sent from the mobile terminal is acquired when the first random number sent from the AP to be accessed to the network has been received. The target AP4021 is further configured to generate a first public key based on the first random number corresponding to the target AP4021 and the second random number, and send the first public key and the second random number to the AP to be accessed to the network. The AP 401 to be accessed to the network is further configured to generate a second public key based on the second random number and the first random number corresponding to the target AP. The AP 401 to be accessed to the network is further configured to be joined to the network to which the candidate APs belong when the first public key is determined to be the same as the second public key.

In an embodiment, the mobile terminal 403 is further configured to: acquire first network access information of the AP to be accessed to the network in response to scanning a QR code of the AP to be accessed to the network; acquire second network access information of the AP to be accessed to the network, and determine whether the AP to be accessed to the network is a reliable AP according to the first network access information and the second network access information; and send network access confirmation information to the target AP when the AP to be accessed to the network is determined to be a reliable AP.

In an embodiment, the AP 401 to be accessed to the network is further configured to: send a probe request frame message, and receive a probe response frame message returned from an AP accessed to the network based on the probe request frame message; obtain a plurality of target probe response frame messages by filtering each of the probe response frame messages received; generate a quick association candidate AP list according to the plurality of target probe response frame messages; and select a plurality of candidate APs from the quick association candidate AP list, and send different first random numbers to the plurality of candidate APs, respectively.

In an embodiment, the AP 401 to be accessed to the network is further configured to: obtain the plurality of target probe response frame messages by screening out the probe response frame message including an information element field of the AP to be accessed to the network from the probe response frame messages.

In an embodiment, the AP 401 to be accessed to the network is further configured to: determine APs corresponding to the target probe response frame messages; and generate the quick association candidate AP list by arranging the APs according to signal strength of the APs.

In an embodiment, the AP 401 to be accessed to the network is further configured to: select candidate APs sequentially from the quick association candidate AP list according to an order of the APs, until a preset quantity of candidate APs are obtained.

In an embodiment, the AP 401 to be accessed to the network is further configured to: obtain a preset public key generation rule; and generate the second public key based on the preset public key generation rule and according to the first random number and the second random number.

It should be noted that, those skilled in the art can clearly learn that, for the convenience and brevity of description, reference may be made to a corresponding process in the above embodiments of the network access method, for describing a specific working process of the above described network access system, which will not be repeated.

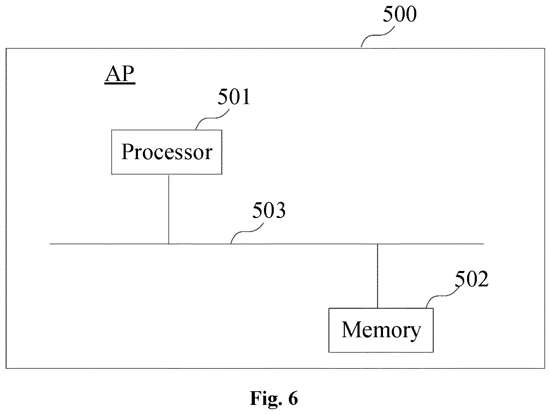

Referring to Fig. 6, Fig. 6 is a schematic block diagram of a structure of an AP provided in an embodiment of the present disclosure.

As shown in Fig. 6, an AP 500 includes a processor 501 and a memory 502. The processor 501 and the memory 502 are connected to each other via a bus 503, and the bus is, for example, an I2C (inter-integrated circuit) bus.

Specifically, the processor 501 is configured to provide computation and control capability for supporting operation of the entire AP. The processor 501 may be a central processing unit (CPU), and the processor 501 may alternatively be other general purpose processor, a digital signal processor (DSP), an application specific integrated circuit (ASIC), a field-programmable gate array (FPGA), or other programmable logic device, a discrete gate or a transistor logic device, a discrete hardware component, or the like. The general-purpose processor may be a microprocessor, or the processor may be any conventional processor.

In an embodiment, the memory 502 may be a flash chip, a read-only memory (ROM), a magnetic disk, an optical disk, a USB disk, or a removable hard drive, or the like.

Those skilled in the art shall understand that, the structure shown in Fig. 6 is only a block diagram of a partial structure related to the present solution, and does not limit an AP to which the present solution is applied. A specific server may include more or less components than those illustrated in Fig. 6, or a combination of some components, or a different component arrangement.

The processor is configured to execute a computer program stored in the memory, and to implement any of the network access methods for an AP provided in the embodiments of the present disclosure while executing the computer program.

In an embodiment, the processor is configured to execute a computer program stored in the memory, and is configured to while executing the computer program: send different first random numbers to a plurality of candidate APs, respectively, the candidate APs being APs accessed to a network; receive a second random number and a first public key sent from a target AP from the plurality of candidate APs; generate a second public key according to the second random number received and the first random number corresponding to the target AP; and join an AP to be accessed to a network to the network to which the candidate APs belong when the first public key is determined to be the same as the second public key.

In an embodiment, when the processor implements sending the different first random numbers to the plurality of candidate APs, respectively, the processor is configured to: send a probe request frame message, and receive a probe response frame message returned from an AP accessed to the network based on the probe request frame message; obtain a plurality of target probe response frame messages by filtering received probe response frame messages; generate a quick association candidate AP list according to the plurality of target probe response frame messages; and select a plurality of candidate APs from the quick association candidate AP list, and send different first random numbers to the plurality of candidate APs, respectively.

In an embodiment, when the processor implements obtaining the plurality of target probe response frame messages by filtering the received probe response frame messages, the processor is configured to: obtain the plurality of target probe response frame messages by screening out the probe response frame message including an information element field of the AP to be accessed to the network.

In an embodiment, when the processor implements generating a quick association candidate AP list according to the plurality of target probe response frame messages, the processor is configured to: determine APs corresponding to the target probe response frame messages, respectively; and generate the quick association candidate AP list by arranging the APs according to signal strength of the APs.

In an embodiment, when the processor implements selecting a plurality of candidate APs from the quick association candidate AP list, the processor is configured to: select candidate APs sequentially from the quick association candidate AP list according to an order of APs, until a preset quantity of candidate APs are obtained.

In an embodiment, when the processor implements generating a second public key according to the second random number and the first random number corresponding to the target AP, the processor is configured to: obtain a preset public key generation rule; and generate a second public key based on the preset public key generation rule and according to the first random number and the second random number.

In an embodiment, the processor is further configured to: acquire a plurality of first random numbers sent from an AP to be accessed to the network when network access confirmation information sent from a mobile terminal is received, and determine a first random number corresponding to a target AP; generate a second random number, and generate a first public key according to the first random number corresponding to the target AP and the second random number; and send the second random number and the first public key to the AP to be accessed to the network, so that the AP to be accessed to the network generates a second public key according to the second random number and the first random number corresponding to the target AP; and the AP to be accessed to the network is joined to a network to which candidate APs belong when the first public key is the same as the second public key.

It should be noted that, those skilled in the art can clearly learn that, for the convenience and brevity of description, reference can be made to a corresponding process in the above embodiments of the network access method, for describing a specific working process of the above AP.

An embodiment of the present disclosure further provides a storage medium for computer readable storage. The storage medium stores one or more programs, and the one or more programs is/are executable by one or more processors, so as to implement steps of any step of the network access method provided in the description of the present disclosure.

The storage medium may be an internal storage unit of the AP in the above embodiments, such as a hard disk or a memory of the AP. The storage medium may alternatively be an external storage device of the AP, for example a pluggable hard disk, a smart media card (SMC), a secure digital (SD) card, a flash card, of the like equipped on the AP.

A person of ordinary skills in the art may understand that, all or some steps of the method disclosed above and functional modules/units of a system or a device may be implemented as software, firmware, hardware, and a proper combination thereof. In an embodiment of the hardware, a division of the functional modules/units mentioned in the above description does not necessarily correspond to a division of physical components. For example, one physical component may have multiple functions, or one function or step may be implemented by multiple physical components cooperatively. Some physical components or all physical components may be implemented as software executed by a processor, such as a central processor, a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communication medium (or transient medium). As is known to a person of ordinary skills in the art, the term of computer storage medium includes volatile and non-volatile, removable and non-removable mediums that may be implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital versatile disk (DVD) or other optical disk storage, a magnetic cassette, a magnetic tape, a magnetic disk storage or other magnetic storage device, or any other medium which can be used to store the desired information and can be accessed by a computer. In addition, it is known to a person of ordinary skills in the art that, the communication medium generally includes computer readable instructions, data structures, program modules or other data in a modulated data signal such as a carrier wave or other transport mechanism and includes any information delivery medium.

It should be understood that, terms "and/or" used in the description of the present disclosure and the attached claims refer to one of associated listed items or any combination and all combinations of multiple items, and include these combinations. It should be noted that, in the text, the terms "comprise", "include", or any other variation thereof, are intended to cover a non-exclusive inclusion, such that a process, method, article, or system that comprises a list of elements includes not only those elements but also other elements not expressly listed or inherent to such process, method, article, or system. An element preceded by "comprises a ..." does not, without more constraints, preclude the existence of additional identical elements in the process, method, article, or system that comprises the element.

Serial numbers of embodiments of the present disclosure are only for description, and do not indicate that one embodiment is better than another embodiment. The above description only involves specific embodiments of the present disclosure, but the protection scope of the present disclosure is not limited to this. Any person skilled in the art can easily think of various changes and replacements within the technical scope of the present disclosure, and these changes or replacements shall all be covered in the protection scope of the present disclosure. Therefore, the protection scope of the present disclosure shall be determined by the scope as defined in the claims.

## Claims

1. A network access method for a wireless access point AP, comprising:
sending different first random numbers to a plurality of candidate APs, respectively, wherein the candidate APs are APs accessed to a network;
receiving a second random number and a first public key sent from a target AP from the plurality of candidate APs;
generating a second public key according to the second random number received and a first random number corresponding to the target AP; and
joining an AP to be accessed to a network to a network to which the candidate APs belong in a case where the first public key is determined to be the same as the second public key.

2. The network access method of claim 1, wherein sending the different first random numbers to the plurality of candidate APs, respectively, comprises:
sending a probe request frame message, and receiving a probe response frame message returned from an AP accessed to the network based on the probe request frame message;
obtaining a plurality of target probe response frame messages by filtering probe response frame messages received;
generating a quick association candidate AP list according to the plurality of target probe response frame messages; and
selecting a plurality of candidate APs from the quick association candidate AP list, and sending the different first random number to the plurality of candidate APs, respectively.

3. The network access method of claim 2, wherein obtaining the plurality of target probe response frame messages by filtering the probe response frame messages received, comprises:
obtaining the plurality of target probe response frame messages by screening out the probe response frame messages comprising an information element field of the APs to be accessed to the network from the probe response frame messages.

4. The network access method of claim 2, wherein generating a quick association candidate AP list according to the plurality of target probe response frame messages, comprises:
determining APs corresponding to the target probe response frame messages, respectively; and
generating the quick association candidate AP list by arranging the APs according to signal strength of the APs.

5. The network access method of claim 2, wherein selecting the plurality of candidate APs from the quick association candidate AP list comprises:
selecting candidate APs sequentially from the quick association candidate AP list according to an order of APs, until a preset quantity of candidate APs are obtained.

6. The network access method of claim 1, wherein generating the second public key according to the second random number and the first random number corresponding to the target AP comprises:
obtaining a preset public key generation rule; and
generating the second public key based on the preset public key generation rule and according to the first random number and the second random number.

7. A network access method for an AP, comprising:
acquiring a plurality of first random numbers sent from an AP to be accessed to a network in a case where network access confirmation information sent from a mobile terminal is received, and determining a first random number corresponding to a target AP;
generating a second random number, and generating a first public key according to the first random number corresponding to the target AP and the second random number; and
sending the second random number and the first public key to the AP to be accessed to the network, such that the AP to be accessed to the network generates a second public key according to the second random number and the first random number corresponding to the target AP, and joining the AP to be accessed to the network to a network to which candidate APs belong in a case where the first public key is the same as the second public key.

8. A network access system, comprising: an AP to be accessed to a network, a plurality of APs accessed to a network, and a mobile terminal, the plurality of APs accessed to the network comprising a target AP communicatively connected to the mobile terminal, wherein
the AP to be accessed to the network is configured to: determine a plurality of candidate APs from the plurality of APs accessed to the network, and signal strength of each of the plurality of candidate APs is greater than signal strength of each of remaining APs accessed to the network;
the AP to be accessed to the network is further configured to: send a first random number to each of the candidate APs;
the target AP is configured to: generate a second random number in response to that network access confirmation information sent from the mobile terminal is acquired in a case where the first random number sent from the AP to be accessed to the network is received;
the target AP is further configured to: generate a first public key based on the first random number corresponding to the target AP and the second random number, and send the first public key and the second random number to the AP to be accessed to the network;
the AP to be accessed to the network is further configured to: generate a second public key based on the second random number and the first random number corresponding to the target AP; and
the AP to be accessed to the network is further configured to: join to a network to which the candidate APs belong in a case where the first public key is determined to be the same as the second public key.

9. The network access system of claim 8, wherein the mobile terminal is further configured to:
acquire first network access information of the AP to be accessed to the network in response to scanning a QR code of the AP to be accessed to the network;
acquire second network access information of the AP to be accessed to the network, and determine whether the AP to be accessed to the network is a reliable AP according to the first network access information and the second network access information; and
send network access confirmation information to the target AP in a case where the AP to be accessed to the network is determined to be a reliable AP.

10. An AP, comprising a processor, a memory, a computer program stored in the memory and executable by the processor, and a data bus for realizing connection and communication between the processor and the memory, wherein the computer program, when executed by the processor, implements any step of the network access method of any one of claims 1 to 7.

11. A storage medium for computer readable storage, wherein the storage medium stores one or more programs, and the one or more programs is/are executable by one or more processors, so as to implement any step of the network access method of any one of claims 1 to 7.
